# EUROPEAN PATENT APPLICATION

(11) **EP 2 829 907 A1**
(43) Date of publication of application: **28.01.2015**
(21) Application number: 13764975.2
(22) Date of filing: 21.03.2013
(51) Int. Cl.: G02F 1/1334

(54) **POLYMER DISPERSED LIQUID CRYSTAL TYPE LIGHT CONTROL BODY USING NICKEL-BASED ELECTRODE, AND MANUFACTURING METHOD THEREOF**

(30) Priority: 21.03.2012 KR 20120028947
(71) Applicant: Q-Sys Co., Ltd., Gwangju 500-460 (KR)
(72) Inventor: KIM, Yang Bae, Gwangju 502-270 (KR); CHO, Jung Dae, Gwangju 500-749 (KR); PARK, Su Cheol, Gwangju 506-304 (KR); LEE, Sang Sub, Gwangju 506-252 (KR); KIM, Kwon Seok, Jangseong-gun Jeollanam-do 515-891 (KR); HONG, Jin Who, Seoul 135-280 (KR)
(74) Representative: Ter Meer Steinmeister & Partner
(86) International application number: PCT/KR2013/002318
(87) International publication number: WO 2013/141614

(57) **Abstract**

This invention relates to a polymer dispersed liquid crystal type light control body using a nickel deposited electrode or a nickel-chromium alloy deposited electrode instead of an existing indium tin oxide electrode, including: two electrode substrates having electrodes, and a light control layer formed between the two electrode substrates, wherein at least one of the two electrode substrates includes a nickel-based electrode. The light control body can exhibit superior near-infrared blocking effects in ON state, and can also manifest peel adhesion strength, pendulum hardness of a film, haze and contrast ratio adapted for commercial applications thereof, ultimately achieving energy saving performance due to heat ray blocking effects as well as cost reductions.

## Description

### Technical Field

The present invention relates to a polymer dispersed liquid crystal type light control body using a nickel-based thin film electrode, instead of an existing indium tin oxide electrode.

### Background Art

A polymer dispersed liquid crystal (PDLC) type light control body, which includes a polymer matrix and fine liquid crystal droplets formed in the polymer matrix, responds to an externally applied voltage. Specifically, when voltage is applied (ON state), liquid crystals are aligned in the applied electric field direction and thus coincide with a travel direction of light passing through the light control body, therefore the light control body transmits light, whereas when voltage is not applied (OFF state), liquid crystals are irregularly aligned and thus are not oriented in a travel direction of light passing through the light control body, therefore the liquid control body scatters light. Briefly, a PDLC type light control body may be driven so as to transmit or scatter light, depending on whether voltage is applied.

Such a PDLC type light control body may exhibit good luminance even without use of a polarizing plate unlike other displays using nematic liquid crystals, and may obviate a rubbing process for orienting liquid crystals, thus simplifying the manufacturing process. Further, the light control body is widely utilized in appliances such as shielding films of windows, and may also be applied to large-area displays.

Typically, a PDLC type light control body is manufactured by applying a liquid crystal dispersed composition comprising liquid crystals, an oligomer, a monomer and a photoinitiator between two electrode substrates having electrode layers to give a liquid crystal dispersed composition layer for a light control body, which is then irradiated with UV light, thereby photocuring the oligomer and the monomer via the photoinitiator contained in the composition, thus forming a polymer matrix and simultaneously forming liquid crystal droplets in the polymer matrix. When curing is induced by e-beams, the liquid crystal dispersed composition may contain no photoinitiator.

For an existing technique regarding the PDLC type light control body, Korean Patent Application Publication No. 10-2011-0062215 discloses a PDLC type light control body, comprising two transparent substrates having transparent electrodes, and a light control layer formed between the two transparent substrates, wherein the light control layer has a pendulum hardness of 30 s or more as measured after removal of either of the two transparent substrates.

As for the existing technique and other PDLC type light control bodies, electrode substrates comprising indium tin oxide (ITO) as a metal oxide film have been widely employed because of superior electrical conductivity and transparency. More specifically, ITO deposited PET films used as the electrode substrates of a conventional PDLC type light control body have a visible transmittance of about 83 ∼ 85% with a sheet resistance of 100 ∼ 250 Ω/□. As the thickness of the ITO deposited film increases, the electrical conductivity may increase to the extent of tens of Ω/□ but visible transmittance may decrease. The ITO deposited PET film useful as the transparent substrate of a PDLC type light control body may be manufactured from a target comprising indium oxide (InO₃) doped with 10 wt% of tin oxide (SnO₂). As indium (In) of ITO, which is a rare metal on earth, becomes exhausted, its price may increase over time, remarkably increasing the manufacturing cost of the PDLC type light control body. Hence, solutions thereto are required. Furthermore, a PDLC type light control body using ITO electrode substrates allows most infrared rays to pass therethrough and thus is insignificant in blocking or absorbing heat rays. Accordingly, when the PDLC type light control body is constructed to buildings, it cannot control selective blocking or transmission of heat rays of solar light, making it impossible to reduce cooling costs in summer and heating costs in winter. Especially, when the PDLC type light control body is applied to the sunroof of a vehicle, it has no function of blocking heat rays of solar light and may undesirably increase energy consumption for cooling or heating of the vehicle, and is thus not currently useful for vehicle applications.

### Disclosure

### Technical Problem

Culminating in the present invention, intensive and thorough research into PDLC type light control bodies having infrared blocking effects, carried out by the present inventors aiming to solve the problems encountered in the prior art, resulted in the finding that when a nickel-based electrode substrate is used, infrared blocking effects may become superior compared to when using an ITO electrode substrate. Therefore, the present ivnention is intended to provide a PDLC type light control body and a method of manufacturing the same, wherein an ITO electrode may be replaced with a nickel-based electrode, thus imparting cost reductions and heat ray blocking functions, thereby exhibiting high energy saving performance.

### Technical Solution

The present invention provides a PDLC type light control body and a method of manufacturing the same, wherein a nickel-based electrode substrate can be used in the light control body, in lieu of an existing ITO electrode substrate, thus achieving cost reductions and decreasing transmission of infrared rays, which are heat rays, thereby imparting energy saving performance. When the nickel-based deposited film is utilized as the electrode substrate of the PDLC type light control body, appropriate electrical conductivity can be exhibited and infrared transmittance can be efficiently adjusted, thereby solving conventional problems of transmission of heat rays.

### Advantageous Effects

According to the present invention, a PDLC type light control body including a nickel-based electrode substrate is superior in near-infrared blocking effects in ON state, and can exhibit peel adhesion strength, pendulum hardness of a film, haze and contrast ratio adapted for commercial applications thereof, ultimately achieving energy saving performance due to heat ray blocking effects as well as cost reductions.

### Description of Drawings

FIG. 1 is a schematic view illustrating a PDLC type light control body configured to include a nickel-based electrode substrate, a PDLC coating layer and a nickel-based electrode substrate;
FIG. 2 is a schematic view illustrating a PDLC type light control body configured to include a nickel-based electrode substrate, a PDLC coating layer and an ITO electrode substrate;
FIG. 3 is a graph illustrating results of OFF-state light transmittance of PDLC type light control bodies of Examples 1, 2, 4 and 5 and Comparative Example 1;
FIG. 4 is a graph illustrating results of ON-state light transmittance of PDLC type light control bodies of Examples 1, 2, 4 and 5 and Comparative Example 1;
FIG. 5 is a graph illustrating results of OFF-state light transmittance of PDLC type light control bodies of Examples 6, 7, 9 and 10 and Comparative Example 2; and
FIG. 6 is a graph illustrating results of ON-state light transmittance of PDLC type light control bodies of Examples 6, 7, 9 and 10 and Comparative Example 2.

### Best Mode

Hereinafter, a detailed description will be given of the present invention.

According to the present invention, a PDLC type light control body using a nickel-based electrode may be manufactured by preparing a liquid crystal dispersed composition for a PDLC type light control body; applying the liquid crystal dispersed composition between two electrode substrates facing each other to form a liquid crystal dispersed composition layer for a light control body, at least one of the electrode substrates being an electrode substrate including a nickel-based thin film layer; and curing the liquid crystal dispersed composition layer formed between the two electrode substrates facing each other.

The curing step may include, but is not limited to, curing by e-beam irradiation, thermal curing, curing using air oxygen, and photocuring. Preferably useful is photocuring in terms of curing efficiency of the nickel-based electrode substrate depending on the transmittance, and this process is performed by radiating light at a wavelength of 330 ∼ 410 nm onto the liquid crystal dispersed composition layer formed between the two electrode substrates facing each other.

In the foregoing and following description, the term "electrode substrate including a nickel-based thin film layer" may be understood as any electrode substrate called a nickel-based electrode substrate in the art, and it is not limited in its shape and structure so long as it includes a nickel-based thin film layer on a glass base or a film base.

According to the present invention, the electrode substrate including a nickel-based thin film layer is obtained by depositing a nickel (Ni) target or a nickel-chromium (Ni-Cr) alloy target on a glass base or a polyester film base, and is thus abbreviated to "a Ni electrode substrate" or "a Ni-Cr alloy electrode substrate" in the following description.

For example, the Ni electrode substrate may be manufactured by depositing a Ni target on glass, but preferable is a flexible electrode substrate resulting from subjecting a polyester film base, especially an amorphous polyethyleneterephthalate (PET) film to roll-to-roll sputtering. As such, the film base may undergo primer treatment to enhance adhesion to a Ni deposited film. If the Ni deposited film has poor adhesion, undesired hillocks and holes may be produced on the surface of the Ni thin film, indirectly changing optical properties and resistivity of the thin film. When the film base is a PET film, the primer may include any organic or inorganic material, and is specifically exemplified by a SiO₂ primer (The Korean Institute of Surface Engineering, 42 (2009) 21-25). Ni thin film deposition is carried out in such a manner that a PET film subjected to primer treatment undergoes DC magnetron sputtering.

As disclosed in an embodiment of the present invention, Ni thin film deposition on a PET film base is specified below. Thermal deposition of a SiO₂ buffer layer on a PET film is performed by use of an evaporation system, and an evaporation material includes 99.99% of granular SiO₂. For the thermal deposition, the inside of an evaporator chamber is evacuated up to 1.3 x 10⁻³ torr using a low-vacuum rotary pump, and then the vacuum level thereof is kept at 3.0 x 10⁻⁵ torr using a booster pump and a high-vacuum oil diffusion pump, and 15 sccm of Ar and 25 sccm of O₂ are introduced to remove organics from a test sample before deposition and to enhance adhesion between a material and a test sample upon deposition, so that ion beam treatment is implemented on the substrate. Upon SiO₂ thermal deposition, the deposition rate of SiO₂ is maintained at 2 Å/s using a deposition controller (IC/5), available from Inficon, capable of controlling the thickness of a thin film in a deposition process, and thus, the deposition time is adjusted so that the film thickness is 10 Å, 50 Å and 100 Å.

After SiO₂ primer deposition on the PET base, a Ni thin film is deposited using a sputtering process. In an embodiment of the present invention, a DC magnetron sputter for mass production is used, which is a system comprising a rotary pump and a cryo pump, and plasma is formed to supply DC power using a 2.2 kW DC generator. A Ni target having a purity of 99.99% with a size of 166 x 380 mm is spaced apart from a test sample at a distance of about 60 mm. In order to deposit a Ni thin film, the SiO₂ primer-coated PET base is fixed to any one side of the hexadecagonal jig of a sputter using a magnet, and upon deposition, the jig is set to rotate at a speed of 5.22 Hz, so that the deposition rate of the Ni thin film is kept at 30 Å/s. The deposition process of the Ni sputter is performed at 2.5 x 10⁻⁵ torr, and upon deposition, the gas composition includes O₂/(Ar+O₂) at 2%, and the deposition pressure is maintained at 2.5 x 10⁻³ torr and the film is deposited at a thickness of about 150Å at room temperature.

The Ni thin film deposition process as above is any one among various methods for manufacturing a light control body including a Ni electrode substrate in the present invention, but the fabrication of the Ni electrode substrate is not limited thereby.

The Ni-Cr alloy thin film may also be manufactured using the Ni thin film deposition process as above, and a Ni-Cr alloy target having a different amount ratio depending on the needs may be used, in lieu of the Ni target.

The Ni electrode substrate preferably has a transmittance of 10 ∼ 60% in the visible range of 400 ∼ 800 nm in order to ensure ON-state visibility of a PDLC type light control body and to block visible rays of solar light, and also preferably has a transmittance of 5 ∼ 60% in the near-infrared range of 800 ∼ 3000 nm in order to block heat rays of solar light. Further, the sheet resistance thereof is preferably set to 50 ∼ 300 Ω/□ so as to enable the operation of a PDLC type light control body. Because the Ni thin film layer may be easily oxidized upon exposure to air, it is noted that the electrode portion not be exposed to air upon formation of a terminal of a PDLC type light control body. The present inventors have studied methods of preventing Ni oxidation and thus have found that the use of a Ni-Cr alloy for an electrode substrate is very effective at preventing Ni oxidation.

Upon deposition of a Ni-Cr alloy thin film, the amount of Ni may be 70 ∼ 90 wt% and the amount of Cr may be 10 ∼ 30 wt% in the Ni-Cr alloy thin film layer. If the amount of Cr is less than 10 wt%, oxidation prevention effects may become insignificant. In contrast, if the amount thereof exceeds 30 wt%, the sheet resistance may increase, undesirably deteriorating electrical conductivity. The most preferable amount of Cr is 15 ∼ 25 wt%. Also, if the amount of Ni is less than 70 wt%, the sheet resistance may increase, undesirably deteriorating electrical conductivity. In contrast, if the amount of Ni exceeds 90 wt%, oxidation prevention effects may decrease. Given the amount range, desirable Ni oxidation prevention effects and electrical conductivity adapted for electrode substrates for a PDLC type light control body may be ensured.

In order to evaluate the oxidation prevention effects of Ni-Cr thin film deposited electrode substrates, test samples deposited from targets having different amounts of Ni and Cr were allowed to stand in an oven under conditions of 65°C and 95% to undergo high-temperature high-humidity reliability testing. For the test samples, the initial sheet resistance and the sheet resistance after high-temperature high-humidity testing for 1000 hr were measured and averaged using a resistance meter (R-CHECK 4 point meter, EDTM, USA). The results are shown in Table 1 below. As is apparent from Table 1, the higher the amount of Cr, the greater the initial sheet resistance. As for the sheet resistance after 1000 hr, when the amount of Cr is zero, the surface of Ni is oxidized and thus the sheet resistance becomes infinite. As the amount of Cr gradually increases, the sheet resistance does not increase greatly, thus effectively preventing Ni oxidation.

**[Table 1]**

| Ni : Cr (amount) | Sheet resistance(Ω/□) | |
|---|---|---|
| | Initial | After 1000 hr |
| 10:0 | 134 | ∞ |
| 9:1 | 172 | 340 |
| 8:2 | 195 | 207 |
| 7:3 | 310 | 314 |

The Ni-Cr alloy electrode substrate preferably has a transmittance of 10 ∼ 60% in the visible range of 400 ∼ 800 nm in order to ensure ON-state visibility of the PDLC type light control body and to block visible rays of solar light, and also preferably has a transmittance of 5 ∼ 60% in the near-infrared range of 800 ∼ 3000 nm in order to block heat rays of solar light. Furthermore, a sheet resistance of 50 ∼ 300 Ω/□ is preferable because of enabling the operation of the PDLC type light control body.

In the PDLC type light control body according to an embodiment of the present invention, both of the two electrode substrates facing each other may be Ni-based electrode substrates as above. Alternatively, either of the two electrode substrates may be a Ni-based electrode substrate or an ITO electrode substrate for use in a conventional light control body. The use of the Ni-based electrode substrate may result in a high blocking rate in the near-infrared range (800 ∼ 3000 nm) under the condition that voltage is applied. Even when two electrode substrates include an ITO electrode substrate and a Ni-based electrode substrate, heat rays in the near-infrared range may be effectively blocked, compared to when using ITO electrode substrates.

Examples of the ITO electrode substrate may include a variety of ITO electrode substrates known as transparent electrodes. Preferably, an ITO electrode substrate is manufactured by depositing a target comprising indium oxide (InO₃) doped with 10 wt% of tin oxide (SnO₂) on a glass base or a polyester film base, and has a transmittance of 83 ∼ 85% in the visible range of 400 ∼ 800 nm and a sheet resistance of 10 ∼ 300 Ω/□. The ITO thin film formed from the target comprising indium oxide doped with 10 wt% of tin oxide is favorable because it is very transparent. Also, the ITO thin film having a sheet resistance of 10 ∼ 300 Ω/□, necessary for operating a PDLC type light control body, has a transmittance of 83 ∼ 90% in the visible range of 400 ∼ 800 nm, which is currently technically possible.

In the step of preparing the liquid crystal dispersed composition for a PDLC type light control body, the liquid crystal dispersed composition includes an oligomer (a prepolymer), a multifunctional or monofunctional monomer, and a liquid crystal compound, and may further include a photoinitiator taking into consideration photocuring. As such, preferably useful is a photoinitiator for forming an absorption peak in the wavelength range of 330 ∼ 410 nm. In addition thereto, a dye may be added.

The liquid crystal dispersed composition for a PDLC type light control body is applied on an electrode substrate and cured to give a curing film, ultimately resulting in a light control layer comprising a polymer matrix and liquid crystal droplets dispersed in the polymer matrix. In the present invention, individual components of the liquid crystal dispersed composition are not particularly limited.

In an embodiment of the present invention, the liquid crystal dispersed composition may comprise 10 ∼ 50 wt% of a thiol-based prepolymer having at least one thiol group; 10 ∼ 60 wt% of a multifunctional or monofunctional acrylic monomer, or a vinylether monomer; 20 ∼ 70 wt% of a liquid crystal compound; and 2 ∼ 7 wt% of a photoinitiator.

The thiol-based prepolymer having a thiol group may be composed exclusively of a thiol-based prepolymer, or may include a mixture of a thiol-based prepolymer and an oligomer, for example, a urethane oligomer of allylether groups, such as NOA 65 available from Norland. The polymer dispersed liquid crystal film resin composition, including such an adhesion enhancing monomer having cyclic urea, may exhibit superior adhesion to the transparent substrate.

The thiol-based prepolymer may include a thiol-based resin having at least one thiol group, for example, alkyl 3-mercaptopropionate, alkylthiocolate, and alkylthiol. Further, useful is a mixture of a thiol-based prepolymer and an oligomer, such as NOA 65 or 68 available from Norland. The prepolymer is preferably used in an amount of 10 ∼ 50 wt% based on the final product. If the amount thereof is less than 10 wt%, phase separation from the liquid crystals may not occur. In contrast, if the amount thereof exceeds 50 wt%, optical properties may deteriorate.

The multifunctional or monofunctional acrylic monomer may include hydroxyethylacrylate (HEA), hydroxyethylmethacrylate (HEMA), 1,6-hexanediolacrylate (HDDA), tripropyleneglycoldiacrylate (TPGDA) and trimethylolpropanetriacrylate (TMPTA), and the vinylether monomer may include butanediol monovinylether, 1,4-cyclohexane dimethanol monovinylether and triethyleneglycol divinylether. As such, the amount of added acrylic monomer or vinylether monomer is preferably about 10 ∼ 60 wt% based on the final product. If the amount thereof is less than 10 wt%, the curing rate may decrease. In contrast, if the amount thereof exceeds 60 wt%, a response speed, which belongs to optical properties, may decrease.

The liquid crystal compound preferably includes a nematic, smetic or cholesteric liquid crystal compound, and examples thereof may include commercially available EM, E7 or E63 from Merck, and ROTN 404 from HoffmanLaRoche. As such, the amount of the liquid crystal compound is preferably 20 ∼ 70 wt% based on the final product. If the amount thereof is less than 20 wt%, the optical properties may deteriorate. In contrast, if the amount thereof exceeds 70 wt%, the curing rate may decrease.

The photoinitiator may be used without limitation so long as it forms an absorption peak in the wavelength range of 330 ∼ 410 nm. Because the Ni deposited film or the Ni-Cr alloy deposited film may partially impede UV transmission necessary for photocuring, the photoinitiator may be appropriately selected from among known photoinitiators.

The photoinitiator may include a free radical-based photoinitiator, such as diphenyl(2,4,6-trimethylbenzoyl)-phosphineoxide, phenylbis(2,4,6-trimethylbenzoyl)-phosphineoxide, bis(η-5-2,4-cyclopentadien-1-yl)bis[2,6-difluoro-3-(1H-pyrol-1-yl)phenyl]titanium, 1-hydroxycyclohexylphenyl ketone and α,α-dimethoxy-α'-hydroxy acetophenone, and currently commercially available Darocur TPO, Irgacure 184 or Darocur 1173 from Ciba Geigy, Switzerland, or UVICURE 204 from Kolon Industries.

The amount of the photoinitiator is preferably about 2 ∼ 7 wt% based on the final product. If the amount thereof is less than 2 wt%, an unreacted material may be generated, undesirably deteriorating the properties. In contrast, if the amount thereof exceeds 7 wt%, an unreacted initiator may be left behind, undesirably deteriorating weather resistance. Optionally, a cationic photoinitiator and other additives may be used, and the resin composition of the invention may be crosslinked by e-beams without the use of the photoinitiator, which may also be incorporated in the scope of the present invention.

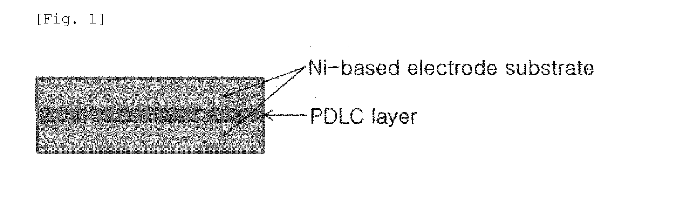

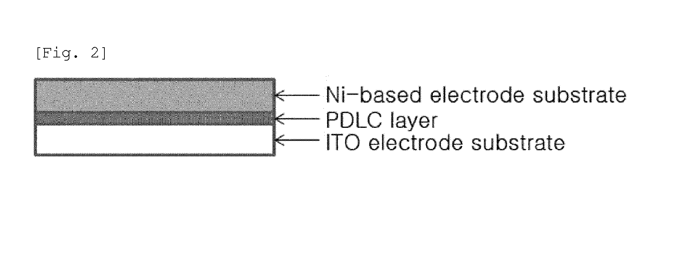

By the series of processes as above, the PDLC type light control body may be obtained, as illustrated in FIGS. 1 and 2, which includes two electrode substrates facing each other; and a light control layer formed between the electrode substrates and configured to include a polymer matrix and liquid crystal droplets dispersed in the polymer matrix, wherein at least one of the electrode substrates is an electrode substrate including a Ni-based thin film layer.

Such a light control body has a light transmittance of 60% or less in the infrared range of 800 ∼ 3000 nm under the condition that voltage is applied, and thereby may exhibit superior energy saving performance due to heat ray blocking effects.

### Mode for Invention

A better understanding of the present invention may be obtained through the following examples and comparative examples which are set forth to illustrate, but are not to be construed to limit the present invention.

### Example 1: Manufacture of light control body comprising Ni deposited substrate (film base)-PDLC layer-Ni deposited substrate (film base)

### (1) Formation of Ni deposited PET film for PDLC type light control body

To thermally deposit a SiO₂ buffer layer on a 188 µm thick PET film, an evaporation system was used, and an evaporation material composed of 99.99% of granular SiO₂ was applied. For thermal deposition, the inner vacuum of an evaporator chamber was set to 1.3 x 10⁻³ torr using a low-vacuum rotary pump, and was then kept at 3.0 x 10⁻⁵ torr using a booster pump and a high-vacuum oil diffusion pump. To remove organics from a test sample before deposition and to enhance adhesion between a material and a test sample upon deposition, 15 sccm of Ar and 25 sccm of O₂ were fed, so that ion beam treatment was carried out on the substrate. Upon SiO₂ thermal deposition, the deposition rate of SiO₂ was maintained at 2 Å/s using a deposition controller (IC/5) available from Inficon capable of controlling the thickness of a thin film in a deposition process, and thus the deposition time was adjusted so that the film thickness was 50 Å.

After SiO₂ primer deposition on the PET base, a Ni thin film was deposited using a sputtering process. In the present invention, used was a DC magnetron sputter for mass production, which is a system provided with a rotary pump and a cryo pump, and plasma was formed to supply DC power using a 2.2 kW DC generator. The Ni target had a purity of 99.99% with a size of 166 x 380 mm, and was spaced apart from a test sample at a distance of about 60 mm. To deposit the Ni thin film, the SiO₂ primer-coated PET base was fixed to any one side of the hexadecagonal jig of the sputter using a magnet, and the jig was set to rotate at a speed of 5.22 Hz upon deposition, so that the deposition rate of the Ni thin film was kept at 30 Å/s. The deposition process of the Ni sputter was conducted at 2.5 x 10⁻⁵ torr, and upon deposition, the gas composition was composed of O₂/(Ar+O₂) at 2%, and the deposition pressure was kept at 2.5 x 10⁻³ torr, thus depositing a thin film at a thickness of about 150 Å at room temperature. Thereby, a Ni electrode substrate was manufactured, having a transmittance of 45% at 550 nm corresponding to the visible range, and a transmittance of 38% at 2000 nm corresponding to the near-infrared range, with a sheet resistance of 134 Ω/□.

### (2) Polymer liquid crystal dispersed composition for PDLC type light control body

58 wt% of an E7 nematic liquid crsytal compound available from Merck, 28 wt% of an oligomer NOA 65 (a mixture of thiol-based prepolymer and urethane oligomer of allylether groups, available from Norland, USA), 10 wt% of a hexanedioldiacrylate monomer and 4 wt% of as a UV photoinitiator diphenyl(2,4,6-trimethylbenzoyl)-phosphineoxide (DAROCUR TPO, Ciba Specialty Chemicals, forming an absorption peak in the wavelength range of 380 nm) were mixed, thus producing a liquid crystal dispersed composition.

### (3) Manufacture of PDLC type light control body

The liquid crystal dispersed composition was applied to a thickness of 20 µm on one side of the manufactured Ni electrode substrate, and then another electrode substrate, which was the same as the electrode substrate having the Ni electrode layer as above, was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the electrode substrate, thereby manufacturing a PDLC type light control body having a structure as illustrated in FIG. 1.

### Example 2: Manufacture of light control body comprising Ni deposited substrate (film base)-PDLC layer-ITO deposited substrate (film base)

A PDLC type light control body was manufactured in the same manner as in Example 1, with the exception that of two electrode substrates facing each other, one was the Ni electrode substrate of Example 1, and the other was an ITO deposited electrode film available from Toray, Japan (obtained by depositing a target comprising indium oxide (InO₃) doped with 10 wt% of tin oxide (SnO₂) on a PET film base, and satisfying a visible transmittance of 88% at 550 nm and a sheet resistance of 100 Ω/□).

Specifically, the liquid crystal dispersed composition was applied to a thickness of 20 µm on one side of the Ni electrode substrate, after which the ITO deposited electrode film of Toray was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 2.

### Example 3: Manufacture of light control body comprising Ni deposited substrate (film base)-PDLC layer-Ni-Cr alloy deposited substrate (film base)

A PDLC type light control body was manufactured in the same manner as in Example 1, with the exception that of two electrode substrates facing each other, one was the Ni electrode substrate of Example 1, and the other was a Ni-Cr alloy electrode substrate (a visible transmittance of 44% at 550 nm, a near-infrared transmittance of 37% at 2000 nm, and a sheet resistance of 195 Ω/□) obtained in the same procedures as in Example 1 using a target having an amount ratio (weight ratio) of Ni to Cr of 8:2 instead of the Ni target.

Specifically, the liquid crystal dispersed composition was applied to a thickness of 20 µm on one side of the Ni electrode substrate, after which the Ni-Cr alloy electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 1.

### Example 4: Manufacture of light control body comprising Ni-Cr alloy deposited substrate (film base)-PDLC layer-Ni-Cr alloy deposited substrate (film base)

A PDLC type light control body was manufactured in the same manner as in Example 1, with the exception that two electrode substrates facing each other were Ni-Cr alloy electrode substrates obtained in the same procedures as in Example 1 using a target having an amount ratio (weight ratio) of Ni to Cr of 8:2 instead of the Ni target.

Specifically, the liquid crystal dispersed composition was applied to a thickness of 20 µm on one side of the Ni-Cr alloy electrode substrate, after which another Ni-Cr alloy electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 1.

### Example 5: Manufacture of light control body comprising Ni-Cr alloy deposited substrate (film base)-PDLC layer-ITO deposited substrate (film base)

A PDLC type light control body was manufactured in the same manner as in Example 2, with the exception that of two electrode substrates facing each other, one was the Ni-Cr alloy electrode substrate of Example 3, and the other was an ITO deposited electrode film available from Toray, Japan.

Specifically, the liquid crystal dispersed composition was applied to a thickness of 20 µm on one side of the Ni-Cr alloy electrode substrate, after which the ITO deposited electrode film of Toray was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 2.

### Comparative Example 1: Manufacture of light control body comprising ITO deposited substrate (film base)-PDLC layer-ITO deposited substrate (film base)

A PDLC type light control body was manufactured in the same manner as in Example 1, with the exception that two electrode substrates facing each other were ITO deposited electrode films available from Toray, Japan (obtained by depositing a target comprising indium oxide (InO₃) doped with 10 wt% of tin oxide (SnO₂) on a PET film base, and satisfying a visible transmittance of 88% at 550 nm and a sheet resistance of 100 Ω/□).

Specifically, the liquid crystal dispersed composition was applied to a thickness of 20 µm on one side of an electrode substrate (188 µm, a PET film) having an ITO electrode layer available from Toray, Japan, after which another ITO deposited electrode substrate of Toray was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the electrode substrate, thereby manufacturing a PDLC type light control body of Comparative Example 1.

As for the Ni-based electrode substrates and the ITO electrode substrates as mentioned above, the transmittance in the visible range of 400 ∼ 800 nm was evaluated with a Varian Cary 500 Scan, and the transmittance in the near-infrared range of 800 ∼ 3000 nm was evaluated with a Varian Cary 500 Scan, and the sheet resistance was evaluated using a resistance meter (R-CHECK 4 point meter, EDTM, USA).

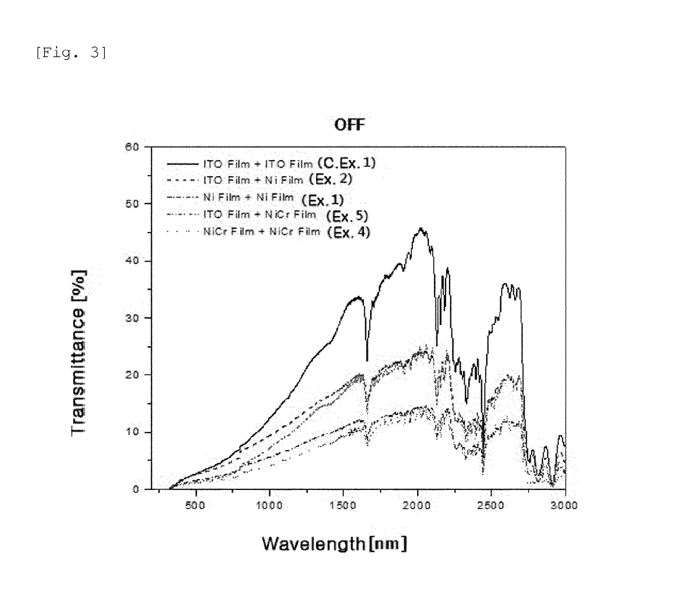

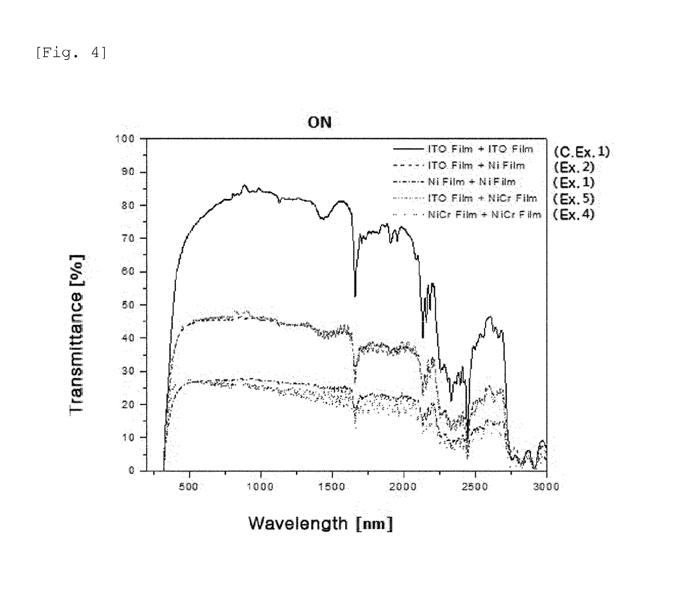

The infrared blocking rate of the PDLC type light control bodies of Examples 1, 2, 4, 5 and Comparative Example 1 was evaluated. The spectra of light (200 ∼ 3000 nm) transmittance in ON state and OFF state using a Varian Cary 500 Scan are illustrated in FIGS. 3 and 4. As illustrated in FIGS. 3 and 4, the PDLC type light control bodies using the Ni-based electrode substrates exhibited superior blocking rates in the near-infrared range (800 ∼ 2000 nm) compared to when using the ITO electrode substrates. Consequently, the PDLC type light control body using at least one Ni-based electrode substrate can be very effective at blocking heat rays in the near-infrared range.

For the PDLC type light control bodies of Examples 1, 2, 3, 4, 5 and Comparative Example 1, ON-state 2000 nm transmittance, adhesion strength, pendulum hardness, haze, and contrast ratio were evaluated as follows. The results are given in Table 2 below. The adhesion strength, pendulum hardness, haze, and contrast ratio of the PDLC type light control bodies are described below.

### 1) ON-state 2000 nm transmittance

ON-state 2000 nm transmittance was utilized as an evaluation factor of transmittance of heat rays because the transmittance is close to the baseline of spectrum at a central wavelength of heat rays (800 ∼ 3000 nm). The transmittance at 2000 nm was represented from the ON-state transmittance spectrum of the PDLC type light control body.

### 2) Peel adhesion strength test

Peel adhesion strength was measured using H5KS available from Tinus Olsen according to ASTM D3654. As such, the peel angle was 180° and the peel speed was 300 mm/min.

### 3) Pendulum hardness test

Pendulum hardness was measured using Konig ref. 707KP available from Sheen according to ASTM D4366, and the Konig pendulum had a triangular shape with a weight of 200 ± 0.2 g. Two ball bearings having a diameter of 5 mm were attached to the rotating shaft, and the pendulum hardness value was expressed as the second (s) unit and the pendulum period was 1.4 ± 0.02 s. The pendulum hardness is useful in measuring softness of a sample.

### 4) Measurement of optical properties

Off haze and contrast ratio were measured using an Avaspec-2048 visible spectrometer available from Avantes. The light source was a halogen lamp (Avalight-HAL, Avantes).

**[Table 2]**

| No. | Light control body | ON-state 2000nm Transmittance (%) | Pendulum hardness (s) | Peel adhesion strength (N/2.54cm) | Haze (%) | Contrast ratio (Tₒₙ/T_{off}) |
|---|---|---|---|---|---|---|
| Ex.1 | Ni-PDLC-Ni | 23 | 42 | 1.3 | 81 | 41.3 |
| Ex.2 | Ni-PDLC-ITO | 37 | 43 | 1.2 | 78 | 38.7 |
| Ex.3 | Ni-PDLC-NiCr | 20 | 42 | 1.2 | 81 | 41.0 |
| Ex.4 | NiCr-PDLC-NiCr | 19 | 41 | 1.2 | 80 | 41.5 |
| Ex.5 | NiCr-PDLC-ITO | 36 | 43 | 1.3 | 79 | 40.6 |
| C.Ex.1 | ITO-PDLC-ITO | 74 | 45 | 1.4 | 80 | 40.1 |

As is apparent from Table 2, the PDLC type light control body having no Ni-based electrode substrate as the transparent substrate as in Comparative Example 1 had ON-state 2000 nm transmittance as high as 74%, and was thus insignificant in blocking heat rays in the near-infrared range. On the other hand, the PDLC type film having the Ni-based electrode substrate had ON-state light transmittance adapted for remarkably high near-infrared blocking effects. Furthermore, when both of the two electrode substrates facing each other were Ni-based electrode substrates, near-infrared blocking effects were the greatest.

Also in the above examples and comparative example, the light control bodies were not significantly different in terms of peel adhesion strength, pendulum hardness of a film, haze and contrast ratio, and thus the light control body using a Ni-based electrode substrate was evaluated to have no problems in commercial applications thereof. Based on the measurement results as above, the PDLC type light control body including a Ni-based electrode substrate can be expected to have energy saving performance due to heat ray blocking effects as well as cost reductions.

### Example 6: Manufacture of light control body comprising Ni deposited substrate (glass base)-PDLC layer-Ni deposited substrate (glass base)

### (1) Formation of Ni deposited glass base for PDLC type light control body

A Ni thin film was deposited on a glass base using a sputtering process. In the present invention, used was a DC magnetron sputter for mass production, which is a system provided with a rotary pump and a cryo pump, and plasma was formed to supply DC power using a 2.2 kW DC generator. The Ni target had a purity of 99.99% with a size of 166 x 380 mm, and was spaced apart from a test sample at a distance of about 60 mm. To deposit the Ni thin film, the glass base was fixed to any one side of the hexadecagonal jig of the sputter using a magnet, and the jig was set to rotate at a speed of 5.22 Hz upon deposition, so that the deposition rate of the Ni thin film was kept at 35 Å/s. The deposition process of the Ni sputter was conducted at 2.5 x 10⁻⁵ torr, and upon deposition, the gas composition was composed of O₂/(Ar+O₂) at 2%, and the deposition pressure was kept at 2.6 x 10⁻³ torr, thus depositing a thin film at a thickness of about 100Å at room temperature. Thereby, a Ni electrode substrate was manufactured, having a transmittance of 46% at 550 nm corresponding to the visible range, and a transmittance of 40% at 2000 nm corresponding to the near-infrared range, with a sheet resistance of 131 Ω/□.

### (2) Polymer liquid crystal dispersed composition for PDLC type light control body

58 wt% of an E7 nematic liquid crsytal compound available from Merck, 28 wt% of an oligomer NOA 65 (a mixture of thiol-based prepolymer and urethane oligomer of allylether groups, available from Norland, USA), 10 wt% of a hexanedioldiacrylate monomer and 4 wt% of as a UV photoinitiator diphenyl(2,4,6-trimethylbenzoyl)-phosphineoxide (DAROCUR TPO, Ciba Specialty Chemicals, forming an absorption peak in the wavelength range of 380 nm) were mixed, thus producing a liquid crystal dispersed composition.

### (3) Manufacture of PDLC type light control body

The liquid crystal dispersed composition was applied to a thickness of 20 µm on one side of the Ni electrode substrate, and then another electrode substrate, which was the same as the electrode substrate having the Ni electrode layer as above, was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the electrode substrate, thereby manufacturing a PDLC type light control body having a structure as illustrated in FIG. 1.

### Example 7: Manufacture of light control body comprising Ni deposited substrate (glass base)-PDLC layer-ITO deposited substrate (glass base)

A PDLC type light control body was manufactured in the same manner as in Example 6, with the exception that of two electrode substrates facing each other, one was the Ni electrode substrate (glass base) of Example 6, and the other was an ITO electrode substrate (ITO deposited glass base, manufactured by depositing a target comprising indium oxide (InO₃) doped with 10 wt% of tin oxide (SnO₂) on glass, and having a visible transmittance of 89% at 550 nm and a sheet resistance of 95 Ω/□, the glass base being 1 mm thick).

Specifically, the liquid crystal dispersed composition was applied to a thickness of 20 µm on one side of the Ni electrode substrate, after which the ITO electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 2.

### Example 8: Manufacture of light control layer body comprising Ni deposited substrate (glass base)-PDLC layer-Ni-Cr alloy deposited substrate (glass base)

A PDLC type light control body was manufactured in the same manner as in Example 6, with the exception that of two electrode substrates facing each other, one was the Ni electrode substrate of Example 6, and the other was a Ni-Cr alloy electrode substrate (a visible transmittance of 45% at 550 nm, a near-infrared transmittance of 39% at 2000 nm, and a sheet resistance of 192 Ω/□) obtained in the same procedures as in Example 6 using a target having an amount ratio (weight ratio) of Ni to Cr of 8:2 instead of the Ni target.

Specifically, the liquid crystal dispersed composition was applied to a thickness of 20 µm on one side of the Ni electrode substrate, after which the Ni-Cr alloy electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 1.

### Example 9: Manufacture of light control layer body comprising Ni-Cr alloy deposited substrate (glass base)-PDLC layer-Ni-Cr alloy deposited substrate (glass base)

A PDLC type light control body was manufactured in the same manner as in Example 6, with the exception that two electrode substrates facing each other were Ni-Cr alloy electrode substrates obtained in the same procedures as in Example 6 using a target having an amount ratio (weight ratio) of Ni to Cr of 8:2 instead of the Ni target.

Specifically, the liquid crystal dispersed composition was applied to a thickness of 20 µm on one side of the Ni-Cr alloy electrode substrate, after which another Ni-Cr alloy electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 1.

### Example 10: Manufacture of light control body comprising Ni-Cr alloy deposited substrate (glass base)-PDLC layer-ITO deposited substrate (glass base)

A PDLC type light control body was manufactured in the same manner as in Example 7, with the exception that of two electrode substrates facing each other, one was the Ni-Cr alloy electrode substrate of Example 8, and the other was an ITO deposited glass electrode substrate.

Specifically, the liquid crystal dispersed composition was applied to a thickness of 20 µm on one side of the Ni-Cr alloy electrode substrate, after which the ITO deposited glass electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the transparent substrate, thereby manufacturing a PDLC type light control body having a structure as illustrated in FIG. 2.

### Comparative Example 2: Manufacture of light control body comprising ITO deposited substrate (glass base)-PDLC layer-ITO deposited substrate (glass base)

A PDLC type light control body was manufactured in the same manner as in Example 6, with the exception that two electrode substrates facing each other were ITO deposited substrates (ITO deposited glass electrode substrates, manufactured by depositing a target comprising indium oxide (InO₃) doped with 10 wt% of tin oxide (SnO₂) on glass, and having a visible transmittance of 89% at 550 nm and a sheet resistance of 95 Ω/□, the glass base being 1 mm thick).

Specifically, the liquid crystal dispersed composition was applied to a thickness of 20 µm on one side of the electrode substrate having an ITO electrode layer, after which another ITO deposited electrode substrate was stacked thereon. Subsequently, using a 365 nm metal halide lamp (UV intensity: 75 mW/cm², UV energy: 1050 mJ/cm²) light source, light having a wavelength of 365 nm was radiated onto the applied liquid crystal dispersed composition layer through the electrode substrate, thereby manufacturing a PDLC type light control body of Comparative Example 2.

As for the Ni-based electrode substrates and the ITO electrode substrates as mentioned above, the transmittance in the visible range of 400 ∼ 800 nm was evaluated with a Varian Cary 500 Scan, and the transmittance in the near-infrared range of 800 ∼ 3000 nm was evaluated with a Varian Cary 500 Scan, and the sheet resistance was evaluated using a resistance meter (R-CHECK 4 point meter, EDTM, USA).

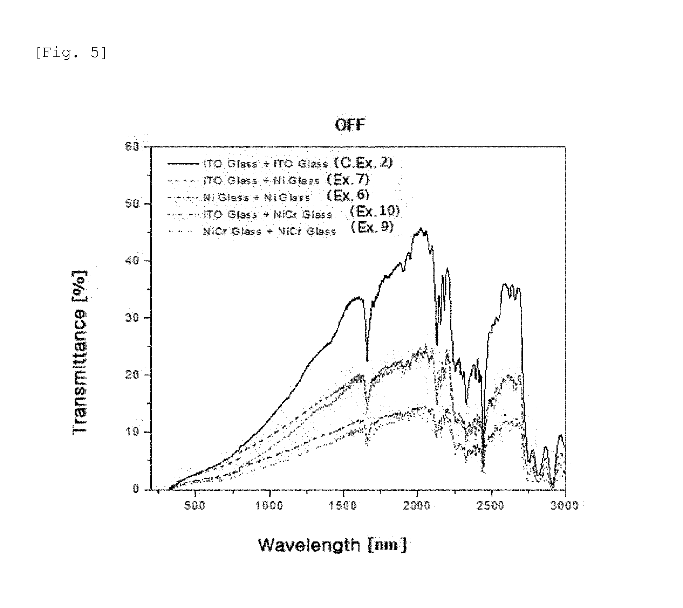

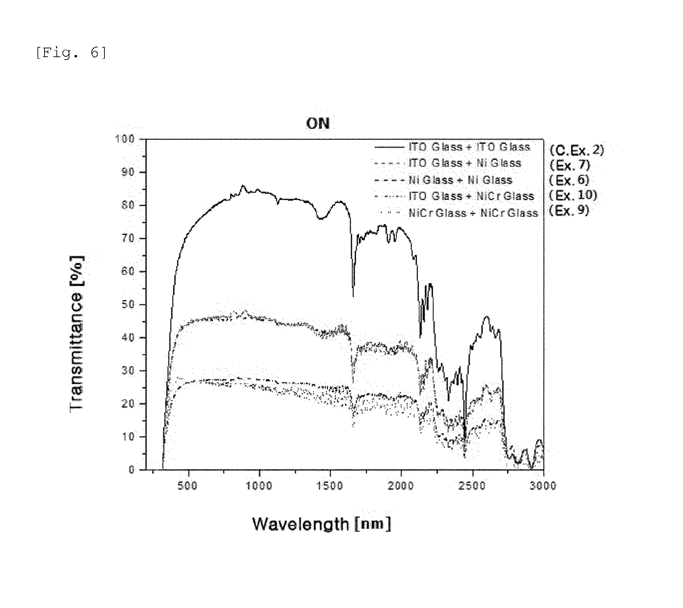

The infrared blocking rate of the PDLC type light control bodies of Examples 6, 7, 9, 10 and Comparative Example 2 was evaluated. The spectra of light (200 ∼ 3000 nm) transmittance in ON state and OFF state using a Varian Cary 500 Scan are illustrated in FIGS. 5 and 6. As illustrated in FIGS. 5 and 6, the PDLC type light control bodies using the Ni-based electrode substrates exhibited superior blocking rates in the near-infrared range (800 ∼ 3000 nm) compared to when using the ITO electrode substrates. Consequently, the PDLC type light control body using at least one Ni-based electrode substrate can be very effective at blocking heat rays in the near-infrared range.

For the PDLC type light control bodies of Examples 6, 7, 8, 9, 10 and Comparative Example 2, ON-state 2000 nm transmittance, pendulum hardness, haze, and contrast ratio were evaluated as in the evaluation manner of Examples 1, 2, 3, 4, 5 and Comparative Example 1. The results are given in Table 3 below.

**[Table 3]**

| No. | Light control body | ON-state 2000nm Transmittance (%) | Pendulum hardness (s) | Haze (%) | Contrast ratio (Tₒₙ/T_{off}) |
|---|---|---|---|---|---|
| Ex.6 | Ni-PDLC-Ni | 23 | 45 | 83 | 39.5 |
| Ex.7 | Ni-PDLC-ITO | 38 | 41 | 79 | 41.0 |
| Ex.8 | Ni-PDLC-NiCr | 21 | 43 | 81 | 41.3 |
| Ex.9 | NiCr-PDLC-NiCr | 20 | 42 | 81 | 42.6 |
| Ex.10 | NiCr-PDLC-ITO | 37 | 44 | 80 | 41.9 |
| C.Ex.2 | ITO-PDLC-ITO | 73 | 47 | 82 | 45.3 |

As is apparent from Table 3, the PDLC type light control body having no Ni-based electrode substrate as the transparent substrate as in Comparative Example 2 had ON-state 2000 nm transmittance as high as 73%, and thus was insignificant in blocking heat rays in the near-infrared range. On the other hand, the PDLC type glass having the Ni-based electrode substrate had ON-state light transmittance adapted for remarkably high near-infrared blocking effects. Furthermore, when both of the two electrode substrates facing each other were Ni-based electrode substrates, near-infrared blocking effects were the greatest.

Also in the above examples and comparative example, the light control bodies were not significantly different in terms of peel adhesion strength, pendulum hardness of a film, haze and contrast ratio, and thus the light control body using a Ni-based electrode substrate was evaluated to have no problems in commercial applications thereof. Based on the measurement results as above, the PDLC type light control body including a Ni-based electrode substrate can be expected to have energy saving performance due to heat ray blocking effects as well as cost reductions.

## Claims

1. A method of manufacturing a polymer dispersed liquid crystal type light control body, comprising:
preparing a liquid crystal dispersed composition for a polymer dispersed liquid crystal type light control body;
applying the liquid crystal dispersed composition between two electrode substrates facing each other, thus forming a liquid crystal dispersed composition layer for a light control body, at least one of the electrode substrates being an electrode substrate including a nickel-based thin film layer; and
curing the liquid crystal dispersed composition layer formed between the two electrode substrates facing each other.

2. The method of claim 1, wherein curing is performed by photocuring the liquid crystal dispersed composition layer formed between the two electrode substrates facing each other using light having a wavelength of 330 ∼ 410 nm.

3. The method of claim 1 or 2, wherein the two electrode substrates facing each other are an electrode substrate including a nickel-based thin film layer.

4. The method of any one of claims 1 to 3, wherein the nickel-based thin film layer is a nickel thin film layer or a nickel-chromium alloy thin film layer.

5. The method of claim 4, wherein the nickel-chromium alloy thin film layer comprises 70 ∼ 90 wt% of nickel and 10 ∼ 30 wt% of chromium.

6. The method of any one of claims 1 to 3, wherein the electrode substrate including a nickel thin film layer as the nickel-based thin film layer is manufactured by depositing a nickel target on a glass base or a polyester film base, and has a transmittance of 10 ∼ 60% in a visible range of 400 ∼ 800 nm, a transmittance of 5 ∼ 60% in a near-infrared range of 800 ∼ 3000 nm, and a sheet resistance of 50 ∼ 300 Ω/□.

7. The method of any one of claims 1 to 3, wherein the electrode substrate including a nickel-chromium alloy thin film layer as the nickel-based thin film layer is manufactured by depositing a nickel-chromium alloy target on a glass base or a polyester film base, and has a transmittance of 10 ∼ 60% in a visible range of 400 ∼ 800 nm, a transmittance of 5 ∼ 60% in a near-infrared range of 800 ∼ 3000 nm, and a sheet resistance of 50 ∼ 300 Ω/□.

8. The method of claim 1 or 2, wherein one of the two electrode substrates facing each other is an indium tin oxide (ITO) electrode substrate.

9. The method of claim 5, wherein the ITO electrode substrate is manufactured by depositing a target comprising indium oxide (InO₃) doped with 10 wt% of tin oxide (SnO₂) on a glass base or a polyester film base, and has a transmittance of 83 ∼ 90% in a visible range of 400 ∼ 800 nm, and a sheet resistance of 10 ∼ 300 Ω/□.

10. The method of claim 2, wherein in preparing the liquid crystal dispersed composition, the liquid crystal dispersed composition comprises an oligomer, a multifunctional or monofunctional monomer, a liquid crystal compound and a photoinitiator, and the photoinitiator forms an absorption peak in a wavelength range of 330 ∼ 410 nm.

11. The method of claim 7, wherein the photoinitiator is at least one selected from among diphenyl(2,4,6-trimethylbenzoyl)-phosphineoxide, phenylbis(2,4,6-trimethylbenzoyl)-phosphineoxide, bis(η-5-2,4-cyclopentadien-1-yl)bis[2,6-difluoro-3-(1H-pyrol-1-yl)phenyl]titanium, 1-hydroxycyclohexylphenyl ketone and α,α-dimethoxy-α'-hydroxy acetophenone.

12. A polymer dispersed liquid crystal type light control body, comprising:
two electrode substrates facing each other; and
a light control layer formed between the electrode substrates and configured to comprise a polymer matrix and liquid crystal droplets dispersed in the polymer matrix,
wherein at least one of the electrode substrates is an electrode substrate including a nickel-based thin film layer, and has a light transmittance of 60% or less in an infrared range of 800 ∼ 2000 nm when voltage is applied.

13. The light control body of claim 12, wherein the nickel-based thin film layer is a nickel thin film layer or a nickel-chromium alloy thin film layer.

14. The light control body of claim 13, wherein the nickel-chromium alloy thin film layer comprises 70 ∼ 90 wt% of nickel and 10 ∼ 30 wt% of chromium.

15. The light control body of claim 12 or 13, wherein the electrode substrate including the nickel thin film layer as the nickel-based thin film layer is manufactured by depositing a nickel target on a glass base or a polyester film base, and has a transmittance of 10 ∼ 60% in a visible range of 400 ∼ 800 nm, a transmittance of 5 ∼ 60% in a near-infrared range of 800 ∼ 2000 nm, and a sheet resistance of 50 ∼ 300 Ω/□.

16. The light control body of claim 12 or 13, wherein the electrode substrate including the nickel-chromium alloy thin film layer as the nickel-based thin film layer is manufactured by depositing a nickel-chromium alloy target on a glass base or a polyester film base, and has a transmittance of 10 ∼ 60% in a visible range of 400 ∼ 800 nm, a transmittance of 5 ∼ 60% in a near-infrared range of 800 ∼ 2000 nm, and a sheet resistance of 50 ∼ 300 Ω/□.

17. The light control body of claim 12, wherein one of the two electrode substrates facing each other is an ITO electrode substrate.

18. The light control body of claim 17, wherein the ITO electrode substrate is manufactured by depositing a target comprising indium oxide (InO₃) doped with 10 wt% of tin oxide (SnO₂) on a glass base or a polyester film base, and has a transmittance of 83 ∼ 90% in a visible range of 400 ∼ 800 nm, and a sheet resistance of 10 ∼ 300 Ω/□.
